# FASCICULE DE BREVET EUROPEEN

(11) **EP 3 700 715 B1**
(45) Date de publication et mention de la délivrance du brevet: **13.10.2021**
(21) Numéro de dépôt: 18808426.3
(22) Date de dépôt: 24.10.2018
(51) Int. Cl.: B25J 9/00

(54) **STRUCTURE D'EXOSQUELETTE ADAPTE A L'EPAULE**
AN DIE SCHULTER ANGEPASSTE EXOSKELETTSTRUKTUR
EXOSKELETON STRUCTURE ADAPTED TO THE SHOULDER

(30) Priorité: 24.10.2017 FR 1760027
(43) Date de publication de la demande: 02.09.2020
(73) Titulaire: Safran Electronics & Defense, 92100 Boulogne-Billancourt (FR); B-Temia Inc., St-Augustin-de-Desmaures, QC G3A 2J9 (CA)
(72) Inventeur: ZOSO, Nathaniel, Quebec Quebec G2A 3E8 (CA); GRENIER, Jordane, 92100 Boulogne-Billancourt (FR)
(74) Mandataire: Regimbeau
(86) Numéro de dépôt international: PCT/FR2018/052642
(87) Numéro de publication internationale: WO 2019/081851

(56) Documents cités:
- EP-A1- 3 156 193
- FR-A1- 3 046 052
- JP-B2- 5 169 469
- US-A1- 2007 225 620

## Description

### DOMAINE DE L'INVENTION

L'invention concerne une structure d'exosquelette.

### ETAT DE LA TECHNIQUE

Les exosquelettes d'assistance à l'effort sont des structures mécaniques qui doublent la structure du squelette humain et qui permettent d'améliorer les capacités physiques du corps humain.

Il existe différents types d'exosquelettes d'assistance à l'effort qui dépendent des tâches à accomplir par l'utilisateur. Chaque type d'exosquelette permet de limiter ou de diminuer l'effort fourni par l'utilisateur lors de l'accomplissement de certaines tâches.

Il existe par exemple des structures d'exosquelette permettant d'assister un utilisateur lorsqu'il accomplit des tâches entrainant des mouvements d'une épaule, notamment pour le levage et la manipulation de charges.

Cependant, ces structures ne permettent généralement pas de s'adapter à l'ensemble des mouvements de l'épaule. Par exemple, ces structures peuvent permettre un mouvement de flexion et d'extension du bras, mais ne pas permettre un mouvement d'abduction et d'adduction du bras.

Or le complexe de l'épaule est un système articulaire complexe possédant six degrés de liberté cumulés (combinant les mouvements de la scapula et ceux de l'épaule en tant que telle).

D'autres structures ont également été proposées permettant de mieux reproduire les mouvements de l'épaule. Toutefois, ces structures présentent généralement un encombrement important, ce qui entrave la mobilité de l'utilisateur.

Par ailleurs, l'intégration de plusieurs actionneurs dans ces structures entraine un accroissement de la masse et de la consommation d'énergie de la structure.

Enfin, il est à noter que lors de certains enchaînements de mouvements de l'épaule, certaines structures d'exosquelette peuvent passer par des configurations appelées « points singuliers », ce qui entraine le blocage de la structure. Le blocage de la structure d'exosquelette est la perte d'un degré de liberté qui survient dans des configurations dans lesquelles deux des axes de rotation de la structure se trouvent alignés entre eux. Ces situations de blocage nécessitent à minima de réaliser l'inverse de la suite de mouvements ayant entrainé la singularité pour libérer l'utilisateur de ses mouvements, et peuvent même endommager la structure d'exosquelette et créer un inconfort pour l'utilisateur.

Le document FR 3 046 052 décrit un module d'épaule pour une structure d'exosquelette comprenant une série de pièces de liaison reliées entre elles par une série de pivots autorisant une rotation des mouvements d'abduction/adduction, de rotation interne/externe et de flexion/extension de l'épaule de l'utilisateur.

### RESUME DE L'INVENTION

Un but de l'invention est de proposer une structure d'exosquelette qui procure une plus grande liberté de mouvement de l'épaule tout en étant compact.

Ce but est atteint dans le cadre de la présente invention grâce à une structure d'exosquelette comprenant :
- un ensemble de dos destiné à être fixé sur le dos d'un utilisateur,
- un ensemble de bras destiné à être fixé à un bras de l'utilisateur,
- un dispositif de liaison d'épaule raccordant l'ensemble de dos à l'ensemble de bras, le dispositif de liaison d'épaule comprenant une première pièce de liaison, un premier pivot reliant la première pièce de liaison à l'ensemble de dos en autorisant une rotation de la première pièce de liaison par rapport à l'ensemble de dos autour d'un premier axe de rotation parallèle à un axe de rotation interne/externe de l'épaule de l'utilisateur, une deuxième pièce de liaison, un deuxième pivot reliant la première pièce de liaison à la deuxième pièce de liaison en autorisant une rotation de la deuxième pièce de liaison par rapport à la première pièce de liaison autour d'un deuxième axe de rotation orthogonal au premier axe de rotation, un troisième pivot reliant la deuxième pièce de liaison à l'ensemble de bras en autorisant une rotation de l'ensemble de bras par rapport à la deuxième pièce de liaison autour d'un troisième axe de rotation orthogonal au deuxième axe de rotation,
dans laquelle le deuxième pivot est agencé de sorte que le deuxième axe de rotation forme un angle non nul avec un axe d'abduction/adduction de l'épaule de l'utilisateur et un angle non-nul avec un axe de flexion/extension de l'épaule de l'utilisateur lorsque l'utilisateur se tient debout, les bras relâchés le long du corps.

Dans une telle structure, le deuxième axe de rotation forme un angle non nul à la fois avec un axe d'abduction/adduction de l'épaule de l'utilisateur et avec un axe de flexion/extension de l'épaule de l'utilisateur. Il est donc possible de concevoir une structure dans laquelle un actionneur unique permet à la fois d'assister l'utilisateur lors d'un mouvement d'abduction/adduction de l'épaule et lors d'un mouvement de flexion/extension de l'épaule, ce qui permet de réduire la masse de la structure et sa consommation d'énergie.

De plus, avec cette configuration du deuxième axe de rotation, l'utilisateur peut par exemple réaliser successivement des mouvements de flexion de l'épaule, puis d'adduction de la scapula, puis un mouvement d'extension de l'épaule sans que le dispositif de liaison ne passe par un point singulier, ce qui évite de créer des situations de blocage.

La structure proposée peut en outre présenter les caractéristiques suivantes :
- le troisième pivot est agencé de sorte que le troisième axe de rotation est orthogonal au premier axe de rotation, lorsque l'utilisateur se tient debout, les bras relâchés le long du corps,
- la structure comprend un actionneur incluant un stator et un rotor monté rotatif par rapport au stator, l'un du stator et du rotor étant monté fixe sur la première pièce de liaison, et l'autre du stator et du rotor étant monté fixe sur la deuxième pièce de liaison, l'actionneur étant propre à générer un couple pour entrainer en rotation la deuxième pièce de liaison par rapport à la première pièce de liaison,
- l'ensemble de bras comprend une pièce de bras propre à venir en appui contre le bras de l'utilisateur pour entrainer le bras de l'utilisateur en rotation par rapport au dos de l'utilisateur, par le biais de l'actionneur,
- l'ensemble de bras comprend une première pièce de bras propre à entourer le bras de l'utilisateur pour fixer la première pièce de bras au bras de l'utilisateur, et une deuxième pièce de bras montée rotative par rapport à la première pièce de bras de manière à autoriser une rotation du bras de l'utilisateur par rapport à la deuxième pièce de bras, tout en étant apte à mettre en appui la première pièce de bras contre le bras de l'utilisateur pour entrainer le bras en rotation par le biais de l'actionneur,
- l'ensemble de bras comprend une troisième pièce de liaison et un quatrième pivot, la troisième pièce de liaison présentant une première extrémité reliée au dispositif de liaison d'épaule par le biais du troisième pivot, et une deuxième extrémité reliée à la pièce de bras par le biais du quatrième pivot,
- le quatrième pivot autorise une rotation de la pièce de bras par rapport à la troisième pièce de liaison autour d'un quatrième axe de rotation parallèle au troisième axe de rotation,
- la troisième pièce de liaison inclut deux pièces montées coulissantes l'une par rapport à l'autre par le biais d'une glissière, le coulissement des pièces l'une par rapport à l'autre autorisant un raccourcissement ou un allongement de la troisième pièce de liaison lors d'une rotation de l'ensemble de bras par rapport à l'ensemble de dos,
- l'ensemble de bras comprend une pièce d'avant-bras propre à entourer l'avant-bras de l'utilisateur pour fixer l'ensemble de bras au bras de l'utilisateur, tout en autorisant une rotation du bras de l'utilisateur à l'intérieur de la pièce d'avant-bras lors d'un mouvement de rotation interne-externe de l'épaule,
- l'ensemble de bras comprend un cinquième pivot reliant la pièce d'avant-bras à la pièce de bras et autorisant une rotation de la pièce d'avant-bras par rapport à la pièce de bras autour d'un cinquième axe de rotation lors d'une rotation du coude de l'utilisateur,
- le dispositif de liaison comprend un mécanisme à quatre barres reliant l'ensemble de dos au premier pivot, le mécanisme à quatre barres comprenant quatre barres, et quatre articulations reliant les barres entre elles en formant un parallélogramme déformable,
- chaque articulation du mécanisme à quatre barres présente un axe de rotation, chaque axe de rotation s'étendant parallèlement à une direction orthogonale à un plan frontal de l'utilisateur,
- le dispositif de liaison comprend en outre un organe élastique de rappel propre à exercer une force de rappel tendant à s'opposer à une déformation du parallélogramme.

### PRESENTATION DES DESSINS

D'autres caractéristiques et avantages ressortiront encore de la description qui suit, laquelle est purement illustrative et non limitative, et doit être lue en regard des figures annexées, parmi lesquelles :
- la figure 1 représente de manière schématique une structure d'exosquelette conforme à un mode de réalisation possible de l'invention, dans une configuration dans laquelle l'utilisateur se tient debout, les bras relâchés le long du corps,
- la figure 2 représente de manière schématique la structure d'exosquelette, dans une configuration dans laquelle l'utilisateur se tient debout, le bras tendu vers l'avant, après avoir exécuté un mouvement de flexion de l'épaule,
- la figure 3 représente de manière schématique la structure d'exosquelette, dans une configuration dans laquelle l'utilisateur se tient debout, le bras tendu vers le côté, après avoir exécuté successivement un mouvement de flexion de l'épaule puis un mouvement d'abduction de l'épaule,
- la figure 4 représente de manière schématique la structure d'exosquelette lors d'un mouvement de flexion du coude de l'utilisateur,
- la figure 5 représente de manière schématique une variante de la structure d'exosquelette des figures 1 à 4.

### DESCRIPTION DETAILLEE D'UN MODE DE REALISATION

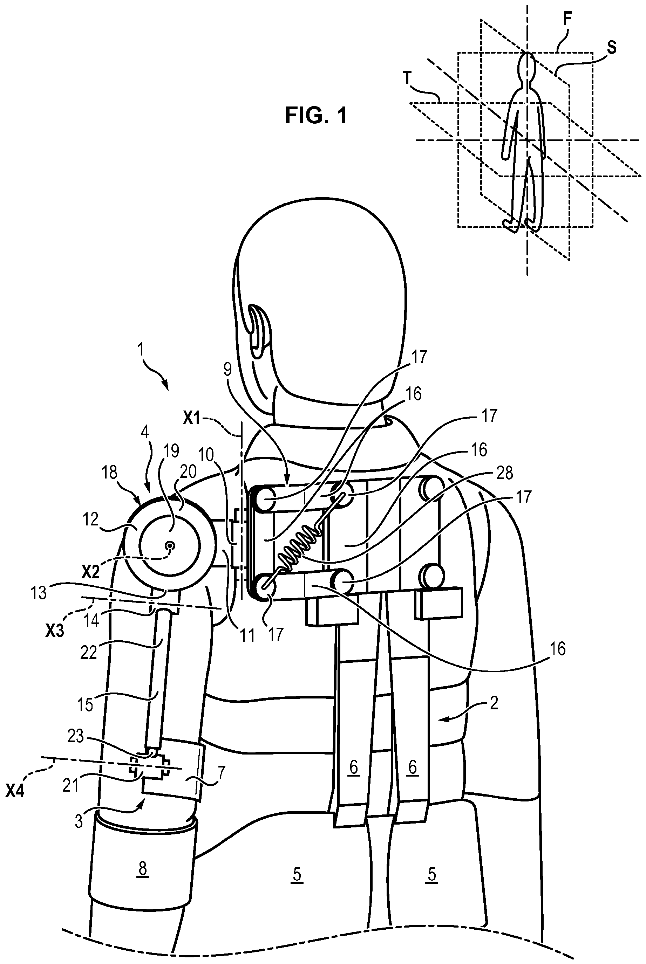

La figure 1 illustre un plan frontal F, un plan sagittal S et un plan transverse T de l'utilisateur. De manière connue, le plan sagittal S est défini comme un plan parallèle au plan médian qui sépare la moitié gauche de la moitié droite du corps de l'utilisateur. Le plan frontal F ou plan coronal est défini comme un plan perpendiculaire au plan médian et qui sépare le corps en une partie antérieure ou ventrale et une partie postérieure ou dorsale. Le plan transverse T ou plan transversal est défini comme un plan perpendiculaire au plan médian et qui sépare le corps en une partie supérieure (du côté de la tête) et une partie inférieure (du côté des pieds).

Sur la figure 1, l'utilisateur se tient debout, les bras relâchés le long du corps. L'utilisateur est équipé d'une structure d'exosquelette 1 permettant d'assister les mouvements de son épaule.

La structure d'exosquelette 1 comprend un ensemble de dos 2 qui, en utilisation normale, est fixée sur le dos d'un utilisateur, un ensemble de bras 3 fixé à un bras de l'utilisateur et un dispositif de liaison d'épaule 4 raccordant l'ensemble de dos 2 à l'ensemble de bras 3.

L'ensemble de dos 2 comprend par exemple une ceinture 5 entourant le bas du tronc de l'utilisateur et une pièce de dos 6 fixée à la ceinture lombaire 5 et s'étendant le long de la colonne vertébrale de l'utilisateur.

L'ensemble de bras 3 comprend une pièce de bras 7 propre à venir en appui contre le bras de l'utilisateur et une pièce d'avant-bras 8 propre à entourer l'avant-bras de l'utilisateur pour fixer l'ensemble de bras 3 au bras de l'utilisateur.

Le dispositif de liaison d'épaule 4 comprend un mécanisme à quatre barres 9, un premier pivot 10, une première pièce de liaison 11, un deuxième pivot 12, une deuxième pièce de liaison 13, un troisième pivot 14 et une troisième pièce de liaison 15.

Le mécanisme à quatre barres 9 relie l'ensemble de dos 2 au premier pivot 10. Le mécanisme à quatre barres 9 comprend quatre barres 16, et quatre articulations 17 reliant les barres 16 entre elles en formant un parallélogramme déformable. Chaque articulation 17 du mécanisme à quatre barres 9 présente un axe de rotation, chaque axe de rotation s'étendant parallèlement à une direction orthogonale au plan frontal F de l'utilisateur, en utilisation normale.

Le dispositif de liaison d'épaule 9 comprend en outre un organe élastique de rappel 28 propre à appliquer sur le mécanisme à quatre barres 9 une force de rappel tendant à s'opposer à la déformation du parallélogramme causée par le poids du dispositif de liaison d'épaule 4 et de l'ensemble de bras 3. Plus précisément, l'organe élastique de rappel 28 comprend un ressort s'étendant entre deux articulations situées au niveau de deux angles opposés du parallélogramme. Dans l'exemple illustré sur la figure 1, le ressort est un ressort de traction reliant l'une des articulation 28 située dans un angle supérieur, le plus proche du plan sagittal, à une autre des articulations 28 située dans un angle inférieur, le plus éloigné du plan sagittal. Ainsi, la force de rappel exercée par le ressort de traction tend à tracter l'ensemble de bras 3 vers le haut par rapport à l'ensemble de dos 2, de manière à compenser le poids exercé par le dispositif de liaison d'épaule et par l'ensemble de bras. La raideur de l'organe élastique de rappel 28 peut être ajustée en fonction du poids à compenser.

Le premier pivot 10 relie la première pièce de liaison au mécanisme à quatre barres 9. Le premier pivot 10 autorise une rotation de la première pièce de liaison 11 par rapport à l'ensemble de dos 2 autour d'un premier axe de rotation X1 parallèle à un axe de rotation interne/externe de l'épaule de l'utilisateur.

Le deuxième pivot 12 relie la première pièce de liaison 11 à la deuxième pièce de liaison 13. Le deuxième pivot 12 autorise une rotation de la deuxième pièce de liaison 13 par rapport à la première pièce de liaison 11 autour d'un deuxième axe de rotation X2 orthogonal au premier axe de rotation X1.

Le deuxième pivot 12 est agencé de sorte que le deuxième axe de rotation X2 forme un angle non nul avec un axe d'abduction/adduction de l'épaule de l'utilisateur et un angle non-nul avec un axe de flexion/extension de l'épaule de l'utilisateur lorsque l'utilisateur se tient debout, les bras relâchés le long du corps comme illustré sur la figure 1.

Le troisième pivot 14 relie la deuxième pièce de liaison 13 à la troisième pièce de liaison 15. Le troisième pivot 14 autorise une rotation de l'ensemble de bras 3 par rapport à la deuxième pièce de liaison 13 autour d'un troisième axe de rotation X3 orthogonal au deuxième axe de rotation X2.

Le troisième pivot 14 est agencé de sorte que le troisième axe de rotation X3 est orthogonal au premier axe de rotation X1 et au deuxième axe de rotation X2, lorsque l'utilisateur se tient debout, les bras relâchés le long du corps. De plus, le troisième axe de rotation X3 forme un angle non nul avec l'axe d'abduction/adduction de l'épaule de l'utilisateur et un angle non-nul avec l'axe de flexion/extension de l'épaule de l'utilisateur lorsque l'utilisateur se tient debout, les bras relâchés le long du corps.

Grâce au premier pivot 10, au deuxième pivot 12 et au troisième pivot 14, le dispositif de liaison 4 autorise une rotation de l'ensemble de bras 3 par rapport à l'ensemble de dos 8 selon trois degrés de liberté.

La structure d'exosquelette 1 comprend également un actionneur 18 incluant un stator 19 et un rotor 20 monté rotatif par rapport au stator 19. Le stator 19 est par exemple monté fixe sur la première pièce de liaison 11 et le rotor 20 est par exemple monté fixe sur la deuxième pièce de liaison 13. L'actionneur 18 est propre à générer un couple pour entrainer en rotation la deuxième pièce de liaison 13 par rapport à la première pièce de liaison 11. L'actionneur peut comprendre par exemple un moteur électrique de type brushless ou un motoréducteur.

L'actionneur 18 peut être activé pour assister le bras de l'utilisateur lors d'un mouvement d'abduction/adduction et/ou de flexion/extension de l'épaule de l'utilisateur, c'est-à-dire pour procurer un effort additionnel qui viens s'ajouter à l'effort produit par l'utilisateur pour produire le mouvement de l'épaule.

L'ensemble de bras 3 comprend en outre un quatrième pivot 21. Le quatrième pivot 21 relie la troisième pièce de liaison 15 à la pièce de bras 7. Le quatrième pivot 21 autorise une rotation de la pièce de bras 7 par rapport à la troisième pièce de liaison 15 autour d'un quatrième axe de rotation X4 parallèle au troisième axe de rotation X3.

La troisième pièce de liaison 15 présente une première extrémité reliée à la deuxième pièce de liaison 13 par le biais du troisième pivot 14, et une deuxième extrémité reliée à la pièce de bras 7 par le biais du quatrième pivot 21.

Par ailleurs, la troisième pièce de liaison 15 comprend deux pièces 22 et 23 montées coulissantes l'une par rapport à l'autre par le biais d'une glissière. Le coulissement axial des pièces 22 et 23 l'une par rapport à l'autre autorise un raccourcissement ou un allongement de la troisième pièce de liaison 15 lors d'une rotation de l'ensemble de bras 3 par rapport à l'ensemble de dos 2, ce qui permet d'accommoder un désalignement des axes de rotations X1, X2 et X3 avec le centre de rotation réal de l'épaule de l'utilisateur.

Par ailleurs, la pièce 23 est montée rotative par rapport à la pièce 22 autour de l'axe de coulissement de la pièce 23 par rapport à la pièce 22.

Enfin, la pièce d'avant-bras 8 autorise une rotation de l'épaule à l'intérieur de la pièce d'avant-bras 8 lors d'un mouvement de rotation interne-externe de l'épaule.

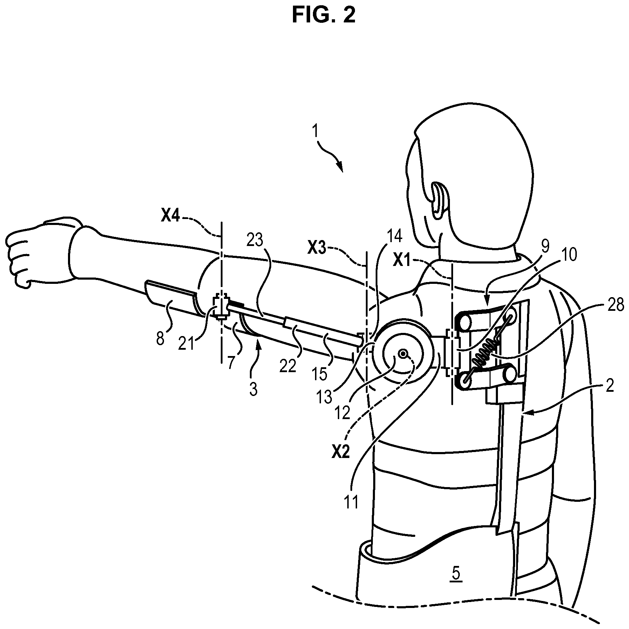

La figure 2 représente de manière schématique la structure d'exosquelette 1, lorsque l'utilisateur se tient debout, le bras tendu vers l'avant, après avoir exécuté un mouvement de flexion de l'épaule.

Le mouvement de flexion de l'épaule entraine à la fois une rotation de la deuxième pièce de liaison 13 par rapport à la première pièce de liaison 11 autour du deuxième axe de rotation X2 et une rotation de la troisième pièce de liaison 15 par rapport à la deuxième pièce de liaison 13 autour du troisième axe de rotation X3.

Le mouvement de flexion peut être assisté par l'activation de l'actionneur 18. Lorsqu'il est activé, l'actionneur 18 génère en effet un couple tendant à entrainer en rotation la deuxième pièce de liaison 13 par rapport à la première pièce de liaison 11, et par conséquent à mettre en appui la pièce de bras 7 sur le bras de l'utilisateur pour assister le bras lors du mouvement de flexion de l'épaule. La pièce de bras 7 vient en appui contre le bras de l'utilisateur pour entrainer le bras de l'utilisateur en flexion ou en extension par rapport à la scapula de l'utilisateur, par le biais de l'actionneur 18.

Comme illustré sur la figure 2, une fois que le bras de l'utilisateur s'étend à l'horizontale vers l'avant, le premier axe de rotation X1 se trouve parallèle au troisième axe de rotation X3.

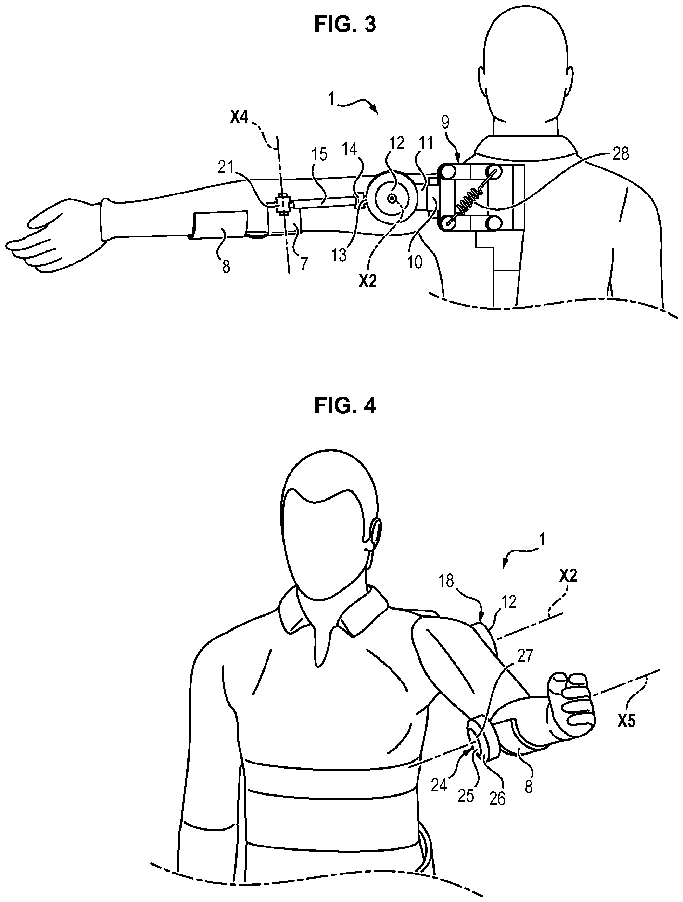

La figure 3 représente de manière schématique la structure d'exosquelette, lorsque l'utilisateur se tient debout, le bras tendu vers le côté, après avoir exécuté successivement un mouvement de flexion de l'épaule et un mouvement d'abduction de l'épaule.

Le mouvement d'abduction de l'épaule entraine à la fois une rotation de la deuxième pièce de liaison 13 par rapport à la première pièce de liaison 11 autour du premier axe de rotation X1 et une rotation de la troisième pièce de liaison 15 par rapport à la deuxième pièce de liaison 13 autour du troisième axe de rotation X3.

Le mouvement d'abduction peut être assisté par l'activation de l'actionneur 18. Lorsqu'il est activé, l'actionneur 18 génère en effet un couple tendant à entrainer en rotation la deuxième pièce de liaison 13 par rapport à la première pièce de liaison 11, et par conséquent à mettre en appui la pièce de bras 7 sur le bras de l'utilisateur pour entrainer le bras en rotation. La pièce de bras 7 vient en appui contre le bras de l'utilisateur pour entrainer le bras de l'utilisateur en abduction ou en adduction par rapport à la scapula de l'utilisateur, par le biais de l'actionneur 18.

Ainsi, l'actionneur 18 sert à la fois à assister l'utilisateur lors d'un mouvement de flexion/extension de l'épaule et lors d'un mouvement d'abduction/adduction de l'épaule.

En outre, comme illustré sur la figure 3, une fois que le bras de l'utilisateur s'étend à l'horizontal sur le côté, le premier axe de rotation X1, le deuxième axe de rotation X2 et le troisième axe de rotation X3 ne sont pas alignés deux à deus. Le dispositif de liaison 4 évite de passer par des points singuliers qui pourraient entrainer le blocage de la structure d'exosquelette 1. De plus, l'efficacité de l'actionneur est conservée.

Comme illustré sur la figure 4, l'ensemble de bras 3 comprend également un cinquième pivot 27 reliant la pièce d'avant-bras 8 à la pièce de bras 7. Le cinquième pivot autorise une rotation de la pièce d'avant-bras 8 par rapport à la pièce de bras 7 autour d'un cinquième axe de rotation X5 lors d'une rotation du coude de l'utilisateur. Plus précisément, le cinquième pivot 27 autorise une rotation de la pièce d'avant-bras 8 par rapport à la pièce de bras 7 autour d'un cinquième axe de rotation X5 lors d'un mouvement de flexion ou d'extension du coude de l'utilisateur.

La structure d'exosquelette peut en outre comprendre un deuxième actionneur 24 incluant un stator 25 et un rotor 26 monté rotatif par rapport au stator 25. Le stator 25 est par exemple monté fixe sur la pièce de bras 7 et le rotor 26 est par exemple monté fixe sur la pièce d'avant-bras 8. L'actionneur 24 est propre à générer un couple pour entrainer en rotation la pièce d'avant-bras 8 par rapport à la pièce de bras 7. L'actionneur 24 peut comprendre par exemple un moteur électrique de type brushless ou un motoréducteur.

L'actionneur 24 peut être activé pour assister le bras de l'utilisateur lors d'un mouvement de flexion/extension du coude de l'utilisateur, c'est-à-dire pour procurer un effort additionnel qui viens s'ajouter à l'effort produit par l'utilisateur pour produire le mouvement du coude.

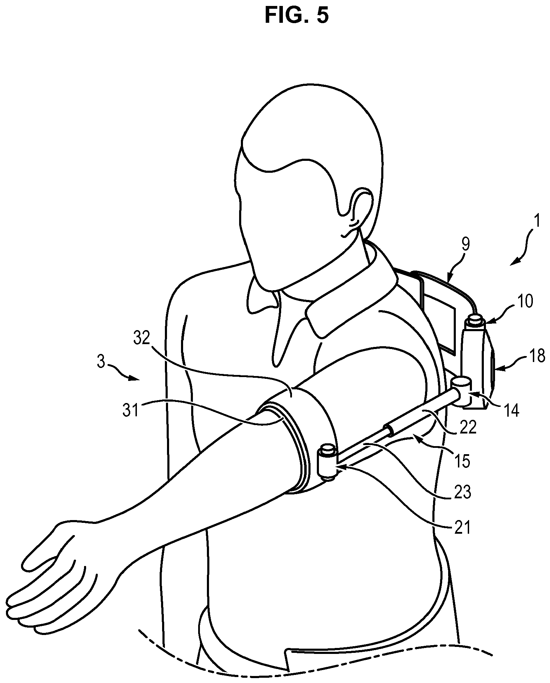

La figure 5 illustre une variante de la structure d'exosquelette des figures 1 à 4. La structure d'exosquelette 1 illustrée sur la figure 5 est identique à la structure d'exosquelette illustrée sur les figures 1 à 4, à l'exception de l'ensemble de bras 3.

Dans cette variante, l'ensemble de bras 3 comprend une première pièce de bras 31 propre à entourer le bras de l'utilisateur pour fixer l'ensemble de bras 3 au bras de l'utilisateur, et une deuxième pièce de bras 32 montée rotative par rapport à la première pièce de bras 32. Plus précisément, dans l'exemple illustré sur la figure 5, la deuxième pièce de bras 32 entoure la première pièce de bras 31, tout en autorisant une rotation de la première pièce de bras 31 (et donc une rotation du bras de l'utilisateur) par rapport à la deuxième pièce de bras 32.

Le troisième pivot 14 relie la troisième pièce de liaison 15 à la pièce de bras 7 par le biais du quatrième pivot 21.

Dans l'exemple illustré sur la figure 5, l'ensemble de bras 3 ne comprend pas de pièce d'avant-bras 8. Toutefois, l'ensemble de bras pourrait également inclure une pièce d'avant-bras 8 reliée à la deuxième pièce de bras 32 par le biais d'un cinquième pivot 27, comme illustré sur les figures 1 à 4.

## Revendications

1. Structure d'exosquelette (1) comprenant :
- un ensemble de dos (2) destiné à être fixé sur le dos d'un utilisateur,
- un ensemble de bras (3) destiné à être fixé à un bras de l'utilisateur,
- un dispositif de liaison d'épaule (4) raccordant l'ensemble de dos (2) à l'ensemble de bras (3), le dispositif de liaison d'épaule (4) comprenant une première pièce de liaison (11), un premier pivot (10) reliant la première pièce de liaison (11) à l'ensemble de dos (2) en autorisant une rotation de la première pièce de liaison (11) par rapport à l'ensemble de dos (2) autour d'un premier axe de rotation (X1) parallèle à un axe de rotation interne/externe de l'épaule de l'utilisateur, une deuxième pièce de liaison (13), un deuxième pivot (12) reliant la première pièce de liaison (11) à la deuxième pièce de liaison (13) en autorisant une rotation de la deuxième pièce de liaison (13) par rapport à la première pièce de liaison (11) autour d'un deuxième axe de rotation (X2) orthogonal au premier axe de rotation (X1), un troisième pivot (14) reliant la deuxième pièce de liaison (13) à l'ensemble de bras (3) en autorisant une rotation de l'ensemble de bras (3) par rapport à la deuxième pièce de liaison (13) autour d'un troisième axe de rotation (X3) orthogonal au deuxième axe de rotation (X2),
dans laquelle le deuxième pivot (12) est agencé de sorte que le deuxième axe de rotation (X2) forme un angle non nul avec un axe d'abduction/adduction de l'épaule de l'utilisateur et un angle non-nul avec un axe de flexion/extension de l'épaule de l'utilisateur lorsque l'utilisateur se tient debout, les bras relâchés le long du corps.

2. Structure selon la revendication 1, dans laquelle le troisième pivot (14) est agencé de sorte que le troisième axe de rotation (X3) est orthogonal au premier axe de rotation (X1), lorsque l'utilisateur se tient debout, les bras relâchés le long du corps.

3. Structure selon l'une des revendications 1 et 2, comprenant un actionneur (18) incluant un stator (19) et un rotor (20) monté rotatif par rapport au stator (19), l'un du stator et du rotor étant monté fixe sur la première pièce de liaison (11), et l'autre du stator et du rotor étant monté fixe sur la deuxième pièce de liaison (13), l'actionneur (18) étant propre à générer un couple pour entrainer en rotation la deuxième pièce de liaison (13) par rapport à la première pièce de liaison (11).

4. Structure selon la revendication 3, dans laquelle l'ensemble de bras (3) comprend une pièce de bras (7) propre à venir en appui contre le bras de l'utilisateur pour entrainer le bras en rotation par le biais de l'actionneur (18).

5. Structure selon la revendication 3, dans laquelle l'ensemble de bras (3) comprend une première pièce de bras (31) propre à entourer le bras de l'utilisateur pour fixer la première pièce de bras (31) au bras de l'utilisateur, et une deuxième pièce de bras (32) montée rotative par rapport à la première pièce de bras (31) de manière à autoriser une rotation du bras de l'utilisateur par rapport à la deuxième pièce de bras (32), tout en étant apte à mettre en appui la première pièce de bras (31) contre le bras de l'utilisateur pour entrainer le bras en rotation par le biais de l'actionneur (18).

6. Structure selon l'une des revendications 4 et 5, dans laquelle l'ensemble de bras (3) comprend une troisième pièce de liaison (15) et un quatrième pivot (21), la troisième pièce de liaison (15) présentant une première extrémité reliée au dispositif de liaison d'épaule (4) par le biais du troisième pivot (14), et une deuxième extrémité reliée à la ou à l'une des pièce(s) de bras (7, 32) par le biais du quatrième pivot (21).

7. Structure selon la revendication 6, dans laquelle le quatrième pivot (21) autorise une rotation de la ou des pièce(s) de bras (7, 31, 32) par rapport à la troisième pièce de liaison (15) autour d'un quatrième axe de rotation (X4) parallèle au troisième axe de rotation (X3).

8. Structure selon l'une des revendications 6 et 7, dans laquelle la troisième pièce de liaison (15) inclut deux pièces (22, 23) montées coulissantes l'une par rapport à l'autre par le biais d'une glissière, le coulissement des pièces (22, 23) l'une par rapport à l'autre autorisant un raccourcissement ou un allongement de la troisième pièce de liaison (15) lors d'une rotation de l'ensemble de bras (3) par rapport à l'ensemble de dos (2).

9. Structure selon l'une des revendications 1 à 8, dans laquelle l'ensemble de bras (3) comprend une pièce d'avant-bras (8) propre à entourer l'avant-bras de l'utilisateur pour fixer l'ensemble de bras (3) au bras de l'utilisateur, tout en autorisant une rotation du bras de l'utilisateur à l'intérieur de la pièce d'avant-bras (8) lors d'un mouvement de rotation interne-externe de l'épaule.

10. Structure selon l'une des revendications 4 à 8 en combinaison avec la revendication 9, dans laquelle l'ensemble de bras (3) comprend un cinquième pivot (27) reliant la pièce d'avant-bras (8) à la pièce de bras (7) et autorisant une rotation de la pièce d'avant-bras (8) par rapport à la pièce de bras (7) autour d'un cinquième axe de rotation (X5) lors d'une rotation du coude de l'utilisateur.

11. Structure selon l'une des revendications 1 à 10, dans lequel le dispositif de liaison (4) comprend un mécanisme à quatre barres (9) reliant l'ensemble de dos (2) au premier pivot (10), le mécanisme à quatre barres (9) comprenant quatre barres (16), et quatre articulations (17) reliant les barres (16) entre elles en formant un parallélogramme déformable.

12. Structure selon la revendication 11, dans laquelle chaque articulation (17) du mécanisme à quatre barres (9) présente un axe de rotation, chaque axe de rotation s'étendant parallèlement à une direction orthogonale à un plan frontal de l'utilisateur.

13. Structure selon l'une des revendications 11 et 12, dans lequel le dispositif de liaison (4) comprend en outre un organe élastique de rappel (28) propre à exercer une force de rappel tendant à s'opposer à une déformation du parallélogramme.

## Patentansprüche

1. Exoskelettstruktur (1), die umfasst:
- eine Rückenbaugruppe (2), die dazu bestimmt ist, am Rücken eines Benutzers befestigt zu werden,
- eine Armbaugruppe (3), die dazu bestimmt ist, an einem Arm des Benutzers befestigt zu werden,
- eine Schulterverbindungsvorrichtung (4), die die Rückenbaugruppe (2) an die Armbaugruppe (3) anschließt, wobei die Schulterverbindungsvorrichtung (4) ein erstes Verbindungsteil (11), einen ersten Drehzapfen (10), der das erste Verbindungsteil (11) mit der Rückenbaugruppe (2) verbindet und dabei eine Drehung des ersten Verbindungsteils (11) in Bezug auf die Rückenbaugruppe (2) um eine erste Drehachse (X1) zulässt, die parallel zu einer inneren/äußeren Drehachse der Schulter des Benutzers ist, ein zweites Verbindungsteil (13), einen zweiten Drehzapfen (12), der das erste Verbindungsteil (11) mit dem zweiten Verbindungsteil (13) verbindet und dabei eine Drehung des zweiten Verbindungsteils (13) in Bezug auf das erste Verbindungsteil (11) um eine zweite Drehachse (X2) zulässt, die orthogonal zu der ersten Drehachse (X1) ist, und einen dritten Drehzapfen (14) umfasst, der das zweite Verbindungsteil (13) mit der Armbaugruppe (3) verbindet und dabei eine Drehung der Armbaugruppe (3) in Bezug auf das zweite Verbindungsteil (13) um eine dritte Drehachse (X3) zulässt, die orthogonal zur zweiten Drehachse (X2) ist,
wobei der zweite Drehzapfen (12) derart angeordnet ist, dass die zweite Drehachse (X2) einen Winkel von nicht null mit einer Abduktions/Adduktionsachse der Schulter des Benutzers bildet und einen Winkel von nicht null mit einer Flexions/Extensionsachse der Schulter des Benutzers bildet, wenn der Benutzer sich mit entlang des Körpers gelockerten Armen aufrecht hält.

2. Struktur nach Anspruch 1, wobei der dritte Drehzapfen (14) derart angeordnet ist, dass die dritte Drehachse (X3) orthogonal zur ersten Drehachse (X1) ist, wenn der Benutzer sich mit entlang des Körpers gelockerten Armen aufrecht hält.

3. Struktur nach einem der Ansprüche 1 und 2, die ein Betätigungselement (18) umfasst, das einen Stator (19) und einen Rotor (20) umfasst, der in Bezug auf den Stator (19) drehbar gelagert ist, wobei einer von dem Stator und dem Rotor fest an dem ersten Verbindungsteil (11) montiert ist und der andere von dem Stator und dem Rotor fest an dem zweiten Verbindungsteil (13) montiert ist, wobei das Betätigungselement (18) geeignet ist, ein Drehmoment zu erzeugen, um das zweite Verbindungsteil (13) in Bezug auf das erste Verbindungsteil (11) drehbar anzutreiben.

4. Struktur nach Anspruch 3, wobei die Armbaugruppe (3) ein Armteil (7) umfasst, das geeignet ist, gegen den Arm des Benutzers in Auflage zu gelangen, um den Arm über das Betätigungselement (18) drehbar anzutreiben.

5. Struktur nach Anspruch 3, wobei die Armbaugruppe (3) ein erstes Armteil (31), das geeignet ist, den Arm des Benutzers zu umgeben, um das erste Armteil (31) am Arm des Benutzers zu befestigen, und ein zweites Armteil (32) umfasst, das derart in Bezug auf das erste Armteil (31) drehbar gelagert ist, dass eine Drehung des Armes des Benutzers in Bezug auf das zweite Armteil (32) zugelassen wird, und dabei geeignet ist, das erste Armteil (31) gegen den Arm des Benutzers in Auflage zu bringen, um den Arm über das Betätigungselement (18) drehbar anzutreiben.

6. Struktur nach einem der Anspruche 4 und 5, wobei die Armbaugruppe (3) ein drittes Verbindungsteil (15) und einen vierten Drehzapfen (21) umfasst, wobei das dritte Verbindungsteil (15) ein erstes Ende, das über den dritten Drehzapfen (14) mit der Schulterverbindungsvorrichtung (4) verbunden ist, und ein zweites Ende aufweist, das über den vierten Drehzapfen (21) mit dem oder einem der Armteile (7, 32) verbunden ist.

7. Struktur nach Anspruch 6, wobei der vierte Drehzapfen (21) eine Drehung des oder der Armteile (7, 31, 32) in Bezug auf das dritte Verbindungsteil (15) um eine vierte Drehachse (X4) zulässt, die parallel zur dritten Drehachse (X3) ist.

8. Struktur nach einem der Ansprüche 6 und 7, wobei das dritte Verbindungsteil (15) zwei Teile (22, 23) umfasst, die über eine Gleitführung in Bezug aufeinander verschiebbar sind, wobei das Verschieben der Teile (22, 23) in Bezug aufeinander eine Verkürzung oder eine Verlängerung des dritten Verbindungsteils (15) bei einer Drehung der Armbaugruppe (3) in Bezug auf die Rückenbaugruppe (2) zulässt.

9. Struktur nach einem der Ansprüche 1 bis 8, wobei die Armbaugruppe (3) ein Vorderarmteil (8) umfasst, das geeignet ist, den Vorderarm des Benutzers zu umgeben, um die Armbaugruppe (3) am Arm des Benutzers zu befestigen und dabei eine Drehung des Arms des Benutzers im Inneren des Vorderarmteils (8) bei einer Innen-Außendrehung der Schulter zuzulassen.

10. Struktur nach einem der Ansprüche 4 bis 8 in Kombination mit Anspruch 9, wobei die Armbaugruppe (3) einen fünften Drehzapfen (27) umfasst, der das Vorderarmteil (8) mit dem Armteil (7) verbindet und dabei eine Drehung des Vorderarmteils (8) in Bezug auf das Armteil (7) um eine fünfte Drehachse (X5) bei einer Drehung des Ellbogens des Benutzers zulässt.

11. Struktur nach einem der Ansprüche 1 bis 10, wobei die Verbindungsvorrichtung (4) einen Mechanismus (9) mit vier Stangen umfasst, der die Rückenbaugruppe (2) mit dem ersten Drehzapfen (10) verbindet, wobei der Mechanismus (9) mit vier Stangen vier Stangen (16) und vier Gelenke (17) umfasst, die die Stangen (16) untereinander verbinden und dabei ein verformbares Parallelogramm bilden.

12. Struktur nach Anspruch 11, wobei jedes Gelenk (17) des Mechanismus (9) mit vier Stangen eine Drehachse aufweist, wobei jede Drehachse sich parallel zu einer Richtung orthogonal zu einer Frontalebene des Benutzers erstreckt.

13. Struktur nach einem der Ansprüche 11 und 12, wobei die Verbindungsvorrichtung (4) ferner ein elastisches Rückstellorgan (28) umfasst, das geeignet ist, eine Rückstellkraft auszuüben, die dazu neigt, einer Verformung des Parallelogramms entgegenzuwirken.

## Claims

1. An exoskeleton structure (1) comprising:
- a back assembly (2) intended to be attached to the back of a user,
- an arm assembly (3) intended to be attached to an arm of the user,
- a shoulder connection device (4) connecting the back assembly (2) to the arm assembly (3), the shoulder connection device (4) comprising a first connection part (11), a first pivot (10) connecting the first connection part (11) to the back assembly (2) while allowing rotation of the first connection part (11) relative to the back assembly (2) around a first axis of rotation (X1) parallel to an internal/external axis of rotation of the shoulder of the user, a second connection part (13), a second pivot (12) connecting the first connection part (11) to the second connection part (13) while allowing rotation of the second connection part (13) relative to the first connection part (11) around a second axis of rotation (X2) orthogonal to the first axis of rotation (X1), a third pivot (14) connecting the second connection part (13) to the arm assembly (3) while allowing rotation of the arm assembly (3) relative to the second connection part (13) around a third axis of rotation (X3) orthogonal to the second axis of rotation (X2),
wherein the second pivot (12) is arranged so that the second axis of rotation (X2) forms a non-zero angle with an abduction/adduction axis of the shoulder of the user and a non-zero angle with a flexion/extension axis of the shoulder of the user when the user is standing, arms relaxed along the body.

2. The structure according to claim 1, wherein the third pivot (14) is arranged so that the third axis of rotation (X3) is orthogonal to the first axis of rotation (X1), when the user is standing, arms relaxed along the body.

3. The structure according to one of claims 1 and 2, comprising an actuator (18) including a stator (19) and a rotor (20) mounted in rotation relative to the stator (19), one of the stator and the rotor being mounted fixed on the first connection part (11), and the other of the stator and the rotor being mounted fixed on the second connection part (13), the actuator (18) being capable of generating a torque to drive in rotation the second connection part (13) relative to the first connection part (11).

4. The structure according to claim 3, wherein the arm assembly (3) comprises an arm part (7) capable of being supported against the arm of the user to drive the arm in rotation by means of the actuator (18).

5. The structure according to claim 3, wherein the arm assembly (3) comprises a first arm part (31) capable of surrounding the arm of the user to attach the first arm part (31) to the arm of the user, and a second arm part (32) mounted in rotation relative to the first arm part (31) so as to allow rotation of the arm of the user relative to the second arm part (32) while still being capable of supporting the first arm part (31) against the arm of the user to drive the arm in rotation by means of the actuator (18).

6. The structure according to one of claims 4 and 5, wherein the arm assembly (3) comprises a third connection part (15) and a fourth pivot (21), the third connection part (15) having a first end connected to the shoulder connection device (4) by means of the third pivot (14), and a second end connected to the or to one arm part(s) (7, 32) by means of the fourth pivot (21).

7. The structure according to claim 6, wherein the fourth pivot (21) allows rotation of the arm part(s) (7, 31, 32) relative to the third connection part (15) around a fourth axis of rotation (X4) parallel to the third axis of rotation (X3).

8. The structure according to one of claims 6 and 7, wherein the third connection part (15) includes two parts (22, 23) mounted sliding relative to one another by means of a runner, the sliding of the parts (22, 23) relative to one another allowing shortening or lengthening of the third connection part (15) during rotation of the arm assembly (3) relative to the back assembly (2).

9. The structure according to one of claims 1 to 8, wherein the arm assembly (3) comprises a forearm part (8) capable of surrounding the forearm of the user to attach the arm assembly (3) to the arm of the user, while still allowing rotation of the arm of the user inside the forearm part (8) during an internal-external rotation movement of the shoulder.

10. The structure according to one of claims 4 to 8 in combination with claim 9, wherein the arm assembly (3) comprises a fifth pivot (27) connecting the forearm part (8) to the arm part (7) and allowing rotation of the forearm part (8) relative to the arm part (7) around a fifth axis of rotation (X5) during rotation of the elbow of the user.

11. The structure according to one of claims 1 to 10, wherein the connection device (4) comprises a four-bar mechanism (9) connecting the back assembly (2) to the first pivot (10), the four-bar mechanism (9) comprising four bars (16) and four hinges (17) connecting the bars (16) to one another by forming a deformable parallelogram.

12. The structure according to claim 11, wherein each hinge (17) of the four-bar mechanism (9) has an axis of rotation, each axis of rotation extending parallel to a direction orthogonal to a frontal plane of the user.

13. The structure according to one of claims 11 and 12, wherein the connection device (4) also comprises an elastic return member (28) capable of exerting a return force tending to oppose deformation of the parallelogram.
